# EUROPÄISCHE PATENTSCHRIFT

(11) **EP 3 370 498 B1**
(45) Veröffentlichungstag und Bekanntmachung des Hinweises auf die Patenterteilung: **08.12.2021**
(21) Anmeldenummer: 16790613.0
(22) Anmeldetag: 03.11.2016
(51) Int. Cl.: A01D 23/02

(54) **LÄNGSENTBLATTER UND ENTSPRECHENDE RÜBENERNTEMASCHINE**
LONGITUDINAL LEAF STRIPPER AND CORRESPONDING BEET HARVESTING MACHINE
EFFEUILLEUSE LONGITUDINALE ET RÉCOLTEUSE DE BETTERAVES CORRESPONDANTE

(30) Priorität: 06.11.2015 DE 202015105938 U
(43) Veröffentlichungstag der Anmeldung: 12.09.2018
(73) Patentinhaber: Exel Industries, 51200 Epernay (FR)
(72) Erfinder: RICHER, Eduard, 93095 Hagelstadt/Gailsbach (DE); GALLMEIER, Florian, 84069 Schierling (DE)
(74) Vertreter: Lavoix
(86) Internationale Anmeldenummer: PCT/EP2016/076522
(87) Internationale Veröffentlichungsnummer: WO 2017/076953

(56) Entgegenhaltungen:
- DE-A1- 3 213 563
- FR-A- 1 587 299
- FR-A1- 2 928 241
- GB-A- 875 861

## Beschreibung

Die Erfindung bezieht sich auf eine Rübenkopf-Putzvorrichtung für Rübenerntemaschinen entsprechend dem Oberbegriff des Anspruchs 1, sowie auf eine entsprechende Rübenerntemaschine.

Eine derartige Rübenkopf-Putzvorrichtung ist aus FR2928241 bekannt.

Weitere Rübenkopf-Putzvorrichtungen sind aus FR1587299 und DE 27 16 015 bekannt.

Die Rübenkopf-Putzvorrichtung, die in letztgenanntem Dokument offenbart ist, hat einen komplexen Aufbau und führt zu häufigen Beschädigungen des Rübenkopfes.

Es ist Aufgabe der vorliegenden Erfindung, eine Rübenkopf-Putzvorrichtung anzugeben, die einfach aufgebaut ist und die den Betrieb einer Rübenerntemaschine vereinfacht.

Außerdem ist es eine weitere Aufgabe der Erfindung, Beschädigungen am Rübenkopf zu verringern.

Erfindungsgemäß wird diese Aufgabe durch die im Kennzeichen des Anspruchs 1 angegebenen Merkmale, im Zusammenhang mit den Merkmalen des Oberbegriffs, gelöst.

Die Erfindung geht davon aus, dass der Motor und das Getriebe an dem Gestell angebracht sind, dass das Gestell mechanische Kopplungsmittel zum Koppeln des Gestells mit einer Rübenerntemaschine aufweist, dass die Rübenkopf-Putzvorrichtung elektrische und/oder hydraulische Kopplungsmittel zum Koppeln des Motors mit einer elektrischen und/oder hydraulischen Energiequelle aufweist, und dass die Rübenkopf-Putzvorrichtung ein separat für die Rübenerntemaschine handhabbares Modul ist.

Die Merkmale von Anspruch 2 erlauben einen einfachen Aufbau der Rübenkopf-Putzvorrichtung.

Die Merkmale des Anspruchs 3 erlauben eine kompakte axiale Bauweise sowie einen einfachen Aufbau der Putzvorrichtung.

Die Merkmale des Anspruchs 4 und 5 bewirken, dass die kinetische Energie, die vom Schlegel auf den Rübenkopf einwirkt, relativ gering ist.

Die Merkmale des Anspruchs 6 führen dazu, dass der Rübenkopf wenig beschädigt wird.

Die Merkmale der Ansprüche 7 bis 11 erlauben einen einfachen Aufbau der Vorrichtung bzw. der Rübenerntemaschine.

Die Erfindung wird anhand eines bevorzugten Ausführungsbeispiels weiter beschrieben. Es zeigen
Fig. 1 eine perspektivische Ansicht einer Rübenerntemaschine gemäß der Erfindung,
Fig. 2 eine Vorderansicht einer Rübenkopf-Putzvorrichtung der Rübenerntemaschine von Fig. 1, in Fahrtrichtung gesehen,
Fig. 3 eine Seitenansicht der Rübenkopf-Putzvorrichtung von Fig. 2,

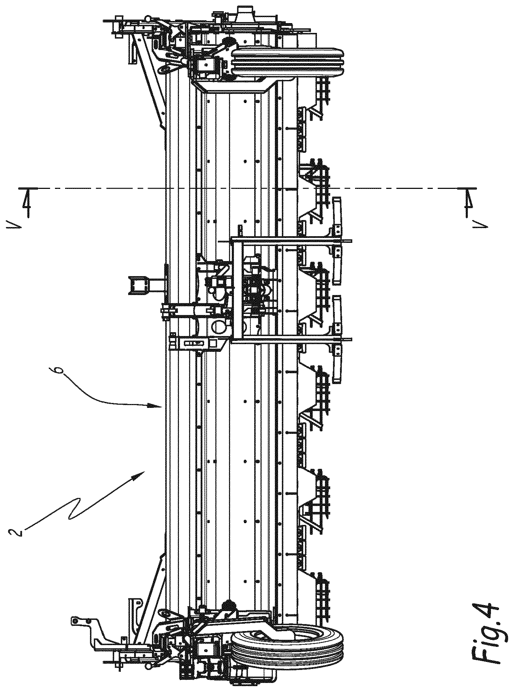

Fig. 4 eine Frontalansicht der Rübenerntemaschine von Figur 1, und

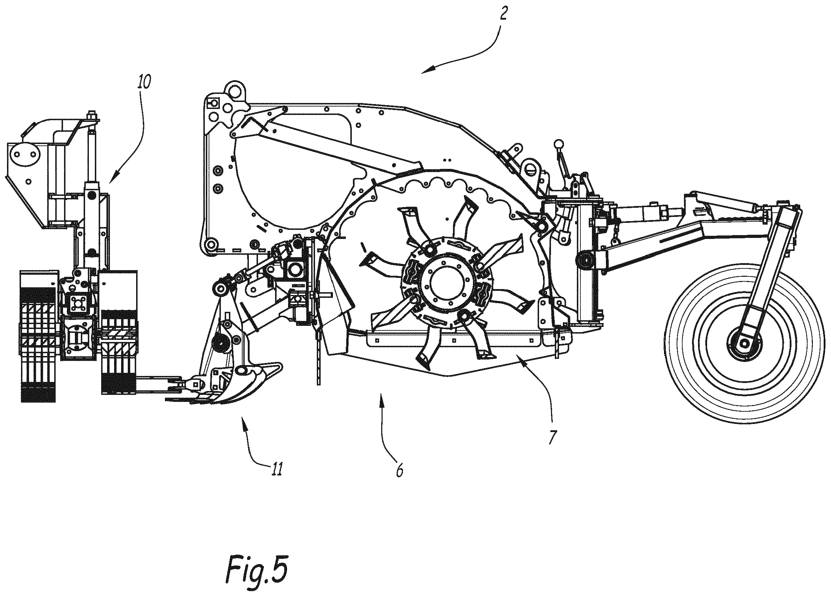

Fig. 5 ein Schnitt durch die Rübenerntemaschine entlang der Linie V-V von Figur 4.

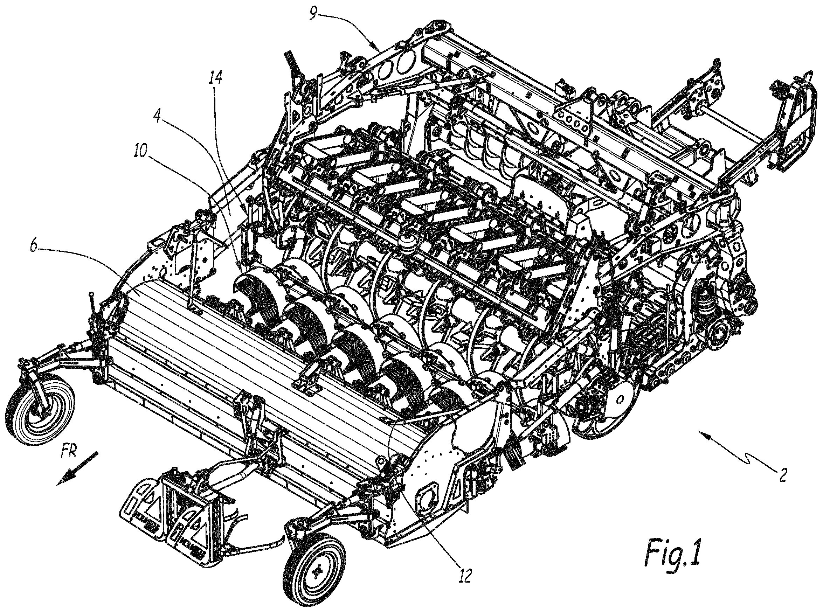

Die auf Fig. 1 dargestellte Rübenerntemaschine 2 umfasst einen Rahmen 4 und eine Vorrichtung 6 zum Köpfen einer im Boden befindlichen Rübe 8.

Die Rübenerntemaschine kann weitere Vorrichtungen umfassen, wie z. B. eine Rodevorrichtung 9.

Die Rübenerntemaschine definiert eine Fahrtrichtung FR, in der sich die Rübenerntemaschine 2 im Betrieb bewegt um die Rüben 8 zu köpfen, die Rübenköpfe zu putzen und evtl. aus dem Boden zu entfernen. Im Folgenden werden die Ausdrücke "vertikal", "horizontal", "quer" und "längs" und "hoch" in der normalen Gebrauchsstellung der Rübenerntemaschine 2 verwendet, die sie während des Erntens der Rüben einnimmt.

Die Vorrichtung 6 zum Köpfen der im Boden befindlichen Rüben 8 umfasst Schleglermesser 7, sowie optionale Nachköpfermesser 11 die in Fahrtrichtung nach den Schleglermessern 7 aber vor den Rübenkopf-Putzvorrichtungen 10 angeordnet sind.

Die Rübenerntemaschine 2 ist dazu ausgebildet, die Rüben 8 einer Mehrzahl von nebeneinander befindlichen Rübenreihen zu köpfen, d.h. die Blätter abzuschneiden, und zu "putzen", d.h. die restlichen Blätter des Rübenkopfes abzuschlegeln. Dazu umfasst die Rübenerntemaschine mindestens zwei Rübenkopf-Putzvorrichtungen 10, im Ausführungsbeispiel sechs Rübenkopf-Putzvorrichtungen 10.

Im Falle des Einsatzes von Nachköpfermessern 11 wird von diesen ein von den Schleglermessern 7 an der Rübe 8 belassener Teil des Blattwerks von der Rübe abgeschnitten.

Danach werden die Rüben 8 aus dem Boden entfernt und die verbleibende Erde gerodet. Dies kann durch die Rübenerntemaschine 2 oder durch eine separate Maschine geschehen.

Die Rübenerntemaschine 2 weist einen Träger 12 sowie eine Höhenverstelleinrichtung 14 auf. Der Träger 12 ist ein Querträger, der sich bezüglich des Rahmens 4 quer zur Fahrtrichtung FR erstreckt. Die Höhenverstelleinrichtung 14 ist dazu ausgebildet, die Rübenkopf-Putzvorrichtungen 10 bezüglich des Rahmens 4 vertikal in der Höhe zu verstellen und umfasst einen Hydraulik- oder Pneumatikzylinder 16 oder einen entsprechenden anderen Aktor.

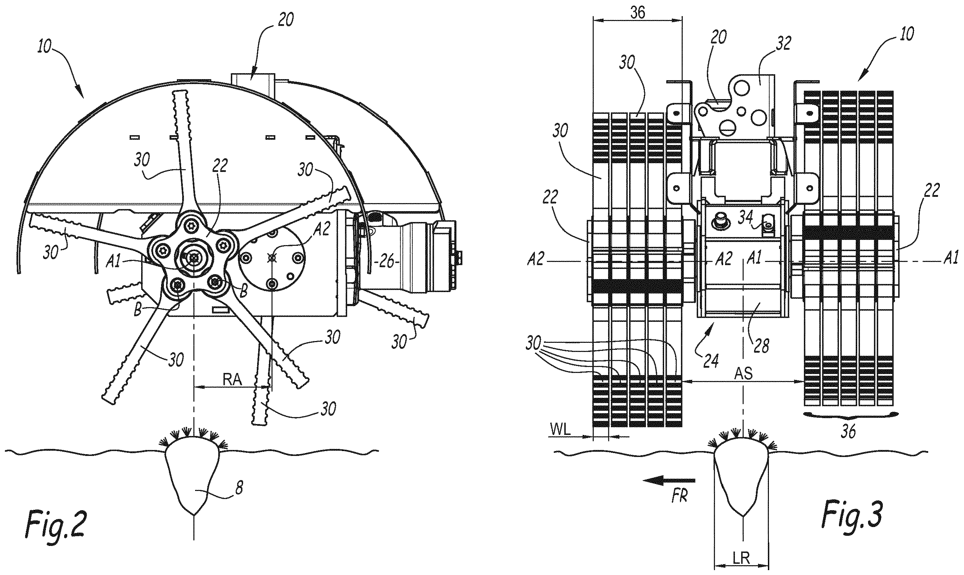

Eine der Rübenkopf-Putzvorrichtungen 10 der Rübenerntemaschine wird anhand der Figuren 2 und 3 näher erläutert. Die anderen Rübenkopf-Putzvorrichtungen sind identisch.

Auf der Figur 2 ist einerseits der Boden zu erkennen, in dem eine geköpfte Rübe 8 steckt sowie andererseits die Rübenkopf-Putzvorrichtung 10.

Die Rübe 8 hat einen Rübenkopf, der eine maximale axiale Länge LR hat.

Die Rübenkopf-Putzvorrichtung 10 weist ein Gestell 20 auf sowie zwei Schlegelnaben 22, wobei jede Schlegelnabe 22 drehbar um eine Drehachse A1 bzw. A2 an dem Gestell 20 angebracht ist. Die Drehachsen A1 und A2 sind parallel zu einander und haben einen radialen horizontalen Abstand RA. Die beiden Achsen A1 und A2 sind im Betrieb auf gleicher Arbeitshöhe gelegen.

Der Ausdruck "axial" wird im Folgenden bezüglich der Achsen A1 und A2 benutzt

Die Rübenkopf-Putzvorrichtung weist weiterhin einen Antrieb 24 auf, der dazu ausgebildet ist, die Schlegelnaben 22 bezüglich des Gestells 20 drehbar um die Achsen A1, A2 anzutreiben. Der Antrieb 24 umfasst einen Motor 26 und ein Getriebe 28, die an dem Gestell angebracht sind. Mit anderen Worten, der Motor 26 und das Getriebe 28 sind an dem Gestell fixiert. Die Schlegelnaben 22 werden durch den Antrieb gegensinnig um die Achsen A1, A2 angetrieben, und zwar so dass die Schlegel 30, wenn sie sich in der unteren Hälfte ihre Pfades befinden, aufeinander zulaufen. Auf der Figur 2 dreht sich also die Schlegelnabe 22 mit der Achse A1 im Gegenurzeigersinn und die Schlegelnabe 22 mit der Achse A2 im Uhrzeigersinn.

Die Rübenkopf-Putzvorrichtung 10 weist unter anderem eine Mehrzahl an Schlegeln 30 auf, die dazu ausgebildet sind, um Blätter oder Blattansätze von den im Boden steckenden Rüben 8 abzutrennen. Jeder Schlegel 30 ist beweglich an einer der Schlegelnaben 22 angebracht. Im Ausführungsbeispiel ist jeder Schlegel 30 an einer Schlegelnabe 22 um eine Drehachse B angelenkt. Die Drehachse B ist parallel zur jeweiligen Drehachse A1, A2 der zugehörigen Schlegelnabe 22. Mindestens einer der Schlegel 30 und vorzugsweise jeder der Schlegel 30 besteht aus Kunststoff, insbesondere aus Elastomer. Das Elastomer kann vorzugsweise Gummi sein.

Die Schlegel 30 sind vorzugsweise stumpfe Schlegel, d.h. haben keine Schnittkante.

Das Gestell 20 weist mechanische Kopplungsmittel 32 zum Koppeln des Gestells 20 mit einer Rübenerntemaschine auf. Die mechanischen Kopplungsmittel 32 umfassen zum Beispiel eine Befestigungsplatte oder einen Befestigungsflansch. Mittels der Befestigungsplatte wird die Rübenkopf-Putzvorrichtung an den Träger 12 befestigt, vorzugsweise durch Verschrauben.

Die Befestigungsplatte 32 kann ebenfalls Mittel zum definierten Festlegen des Gestells 20 bezüglich des Trägers 12 aufweisen, z. B. einen Passstift oder Passlöcher, die in kooperierende Passstifte oder Passlöcher des Trägers 12 eingreifen.

Die Rübenkopf-Putzvorrichtung 10 umfasst ebenfalls elektrische und/oder hydraulische Kopplungsmittel 34 zum Koppeln des Motors 26 mit einer elektrischen und/oder hydraulischen Energiequelle. Elektrische Kopplungsmittel umfassen zum Beispiel elektrische Leitungen und entsprechende Stecker/Buchsen. Hydraulische Kopplungsmittel umfassen Hydraulikleitungen und entsprechende Stecker/Buchsen.

Die Rübenkopf-Putzvorrichtung 10 ist ein separat von der Rübenerntemaschine 2 handhabbares Modul. Dies bedeutet, dass die Rübenkopf-Putzvorrichtung 10 vom Träger 12 getrennt werden kann und zwar durch Lösen der Kopplung 32 des Gestells mit der Rübenerntemaschine sowie durch Lösen der elektrischen und/oder hydraulischen Kopplungsmittel 34 und dass die Rübenkopf-Putzvorrichtung 10 bei gelösten Kopplungsmitteln in einem Stück handhabbar, z. B. transportierbar oder lagerbar ist.

Vorzugsweise ist das Getriebe 28 ein Getriebe das im Kraftweg vom Motor 26 zu jeder der Schlegelnaben 22 ausschließlich Zahn- oder Reibräder aufweist.

Insbesondere ist das Getriebe 28 ein Getriebe ohne Ketten- oder Riemenantrieb.

Die beiden Schlegelnaben 22 sind axial voneinander beabstandet. Das Getriebe 28 ist axial zwischen den Schlegelnaben 22 angebracht. Wie auf Fig. 3 ersichtlich, ist das Getriebe 28 axial ausschließlich zwischen den Schlegelnaben 22 positioniert so dass das Getriebe 28 die Schlegelnaben nicht axial überdeckt. Der Motor 26 ist ebenfalls axial zwischen den Schlegelnaben 22 angebracht. Der Motor 26 ist axial ausschließlich zwischen den Schlegelnaben 22 positioniert, so dass der Motor 26 die Schlegelnaben nicht axial überdeckt.

Der Motor 26 ist ein hydraulischer Motor oder ein elektrischer Motor. Jede der Rübenkopf-Putzvorrichtungen 10 hat einen eigenen Motor 26.

Die Schlegel 30, die an einer der Schlegelnaben 22 angebracht sind, haben einen axialen Abstand AS von den Schlegeln 30, die an der anderen Schlegelnabe 22 angebracht sind. Bei einer Mehrzahl an Schlegeln, die axial an einer Schlegelnabe befestigt sind, ist der Abstand AS der axiale Abstand zwischen den beiden Schlegeln 30, die jeweils der benachbarten Schlegelnabe am Nächsten gelegen sind.

Insbesondere ist der Abstand AS größer als 10 cm und kleiner als 50 cm.

Die Schlegel 30 einer Schlegelnabe 22 bilden eine Mehrzahl an Schlegelgruppen 36. Jede Schlegelgruppe 36 umfasst mindestens 2 Schlegel, im Ausführungsbeispiel 5 Schlegel, die axial fluchtend hintereinander auf einer Schlegelnabe 22 angebracht sind. Sämtliche Schlegel 30 einer Schlegelgruppe 36 sind axial hintereinander um dieselbe Achse B an der Nabe 22 angelenkt. Die Schlegel 30 haben eine wirksame axiale Länge WL, die kleiner ist als die maximale axiale Länge LR eines Rübenkopfes, insbesondere ist die wirksame axiale Länge WL kleiner als die Hälfte der maximalen axialen Länge LR eines Rübenkopfes. Vorzugsweise beträgt die wirksame axiale Länge WL eines Schlegels zwischen 1 cm und 8 cm.

Im Betrieb wird die Rübenerntemaschine 2 in Fahrtrichtung FR bewegt. Zuerst werden die Blätter der Rüben 8 durch die Köpfvorrichtung 6, bzw durch die Schleglermesser 7 abgetrennt. Falls Nachköpfermesser 11 eingesetzt werden, wird ein oberer Teil des Blattwerkes der Rüben 8 hiervon abgeschnitten. Danach werden die übrig gebliebenen Blattansätze an den Rüben sukzessive von den Schlegeln 30 der einen Schlegelnabe 22 abgetrennt, bzw die vom Nachköpfermesser 11 auf dem Rübenkopf liegengelassenen Rübenkopfteile und Blätter von der Rübe entfernt. Anschließend wird die Rübe 8 von den Schlegeln 30 der anderen Nabe 22 behandelt.

Die Höhenverstelleinrichtung 14 erlaubt die Einstellung der Arbeitshöhe der Schlegel 30 mit Bezug zu den Rüben oder zur Köpfeinrichtung 6.

Die Nachköpfermesser 11 sind abnehmbar an einem Rahmen der Vorrichtung 6 zum Köpfen angebracht.

## Patentansprüche

1. Rübenkopf-Putzvorrichtung für eine Rübenerntemaschine mit
- einem Gestell (20), und
- mindestens zwei Schlegelnaben (22), wobei jede Schlegelnabe drehbar um eine jeweilige Drehachse (A1, A2) an dem Gestell angebracht ist,
wobei das Gestell mechanische Kopplungsmittel (30) zum Koppeln des Gestells (20) mit einer Rübenerntemaschine aufweist,
wobei die Rübenkopf-Putzvorrichtung eine Mehrzahl an Schlegeln (30) umfasst, die dazu ausgebildet sind um Blätter oder Blattansätze von im Boden steckenden Rüben abzutrennen oder um Blattansätze von im Boden steckenden, geköpften Rüben zu entfernen,
wobei jeder Schlegel beweglich an einer der Schlegelnaben angebracht, vorzugsweise angelenkt, ist, und
wobei die Rübenkopf-Putzvorrichtung ein separat von der Rübenerntemaschine handhabbares Modul ist, **dadurch gekennzeichnet, dass**
die Rübenkopf-Putzvorrichtung einen Antrieb (24) umfasst, welcher dazu ausgebildet ist,
die Schlegelnaben bezüglich des Gestells anzutreiben, dass
der Antrieb einen Motor (26) und ein Getriebe (28) umfasst, dass
der Motor und das Getriebe an dem Gestell angebracht sind, und dass
die Rübenkopf-Putzvorrichtung elektrische oder hydraulische Kopplungsmittel (34) zum Koppeln des Motors mit einer elektrischen oder hydraulischen Energiequelle aufweist.

2. Rübenkopf-Putzvorrichtung nach Anspruch 1, **dadurch gekennzeichnet, dass** das Getriebe (28) ein Getriebe ist, das im Kraftweg vom Motor zu jeder der Schlegelnaben (22) ausschließlich Zahn- oder Reibräder aufweist.

3. Rübenkopf-Putzvorrichtung nach einem der vorhergehenden Ansprüche, **dadurch gekennzeichnet, dass** das Getriebe (28) axial zwischen den Schlegelnaben (22) angebracht ist, und insbesondere, dass der Motor (26) ebenfalls axial zwischen den Schlegelnaben (22) angebracht ist.

4. Rübenkopf-Putzvorrichtung nach einem der vorhergehenden Ansprüche, **dadurch gekennzeichnet, dass** mindestens zwei Schlegel (30) die auf einer Schlegelnabe (22) angebracht sind eine Schlegelgruppe (36) bilden und die Schlegel jeder Schlegelgruppe, mit Bezug auf die Schlegelnabenachse (A1, A2), axial hintereinander angeordnet sind.

5. Rübenkopf-Putzvorrichtung, nach Anspruch 4, **dadurch gekennzeichnet, dass** mindestens einer der Schlegel einer Schlegelgruppe (36) eine wirksame axiale Länge (WL) hat, und dass die wirksame axiale Länge des mindestens einen Schlegels zwischen 1 cm und 8 cm beträgt.

6. Rübenkopf-Putzvorrichtung nach einem der vorhergehenden Ansprüche, **dadurch gekennzeichnet, dass** mindestens einer der Schlegel (30), vorzugsweise jeder Schlegel (30) aus Kunststoff, insbesondere aus Elastomer besteht.

7. Rübenkopf-Putzvorrichtung nach einem der vorhergehenden Ansprüche, **dadurch gekennzeichnet, dass** der Motor (26) ein hydraulischer Motor oder ein elektrischer Motor ist.

8. Rübenkopf-Putzvorrichtung nach einem der vorhergehenden Ansprüche, **dadurch gekennzeichnet, dass**
die elektrischen oder hydraulischen Kopplungsmittel (34) elektrische Kopplungsmittel zum Koppeln des Motors mit einer elektrischen Energiequelle sind, oder dass
die Rübenkopf-Putzvorrichtung elektrische und hydraulische Kopplungsmittel (34) zum Koppeln des Motors mit einer elektrischen und einer hydraulischen Energiequelle aufweist.

9. Rübenerntemaschine (2) mit einem Rahmen (4) und mindestens einer Vorrichtung (6) zum Köpfen einer im Boden befindliche Rübe (8), **dadurch gekennzeichnet, dass** die Rübenerntemaschine mindestens eine Rübenkopf-Putzvorrichtung (10) gemäß einer der vorhergehenden Ansprüche aufweist.

10. Rübenerntemaschine (2) gemäß Anspruch 9, **dadurch gekennzeichnet, dass** die Rübenerntemaschine mindestens zwei Rübenkopf-Putzvorrichtungen (10) gemäß einem der vorhergehenden Ansprüche aufweist und dass die Rübenerntemaschine einen Träger (12) aufweist, auf dem die Rübenkopf-Putzvorrichtungen angebracht sind, und wobei vorzugsweise die Rübenerntemaschine eine Höhenverstelleinrichtung (14) der Rübenkopf-Putzvorrichtung aufweist, insbesondere einen Aktor (16), die den Träger bezüglich des Rahmens (4) vertikal verstellen.

11. Rübenerntemaschine gemäß Anspruch 9 oder 10, **dadurch gekennzeichnet, dass** die Rübenerntemaschine eine Vorrichtung (6) zum Köpfen der im Boden befindlichen Rüben (8) umfasst und dass diese Vorrichtung (6) Schleglermesser (7), sowie optional Nachköpfermesser (11), umfasst.

## Claims

1. Beet-head cleaning device for a beet harvesting machine having
- a frame (20),
- at least two flail hubs (22), wherein each flail hub is rotatably mounted about a respective axis of rotation (A1, A2) on the frame, and
wherein the frame has mechanical coupling means (30) for coupling the frame (20) to a beet harvesting machine,
wherein the beet-head cleaning device comprises a plurality of flails (30), which are designed to separate leaves or leaf bases from beets stuck in the ground or to remove leaf bases from topped beets stuck in the ground, and
wherein each flail is movably mounted, preferably hinged, to one of the flail hubs, and
wherein the beet-head cleaning device is a module that can be operated separately from
the beet harvesting machine, **characterised in that**,
the beet-head cleaning device comprises a drive (24), which is designed to drive the flail hubs relative to the frame, that
the drive comprises a motor (26) and a transmission (28), that
the motor and the transmission are mounted on the frame, and that
the beet-head cleaning device has electric and hydraulic coupling means (34) for coupling
the motor to an electric or hydraulic energy source.

2. Beet-head cleaning device according to claim 1, **characterised in that**, the transmission (28) is a transmission that has only gear wheels or friction wheels in the force path from the motor to each of the flail hubs (22).

3. Beet-head cleaning device according to any of the preceding claims, **characterised in that**, the transmission (28) is axially mounted between the flail hubs (22), and, in particular, that the motor (26) is also axially mounted between the flail hubs (22).

4. Beet-head cleaning device according to any of the preceding claims, **characterised in that**, at least two flails (30), which are mounted on a flail hub (22), form a flail group (36) and the flails in each flail group are arranged axially one behind the other relative to the flail hub axis (A1, A2).

5. Beet-head cleaning device, according to claim 4, **characterised in that**, at least one of the flails in a flail group (36) has an effective axial length (WL), and that the effective axial length of the at least one flail is between 1 cm and 8 cm.

6. Beet-head cleaning device according to any of the preceding claims, **characterised in that**, at least one of the flails (30), preferably each flail (30), consists of plastic materials, in particular elastomer.

7. Beet-head cleaning device according to any of the preceding claims, **characterised in that**, the motor (26) is a hydraulic motor or an electric motor.

8. Beet-head cleaning device according to any of the preceding claims, **characterised in that**,
the electric or hydraulic coupling means (34) are electric coupling means for coupling the motor to an electric energy source, or that
the beet-head cleaning device has electric and hydraulic coupling means (34) for coupling the motor to an electric and a hydraulic energy source.

9. Beet harvesting machine (2) having a frame (4) and at least one device (6) for topping a beet (8) situated in the ground, **characterised in that**, the beet harvesting machine has at least one beet-head cleaning device (10) according to any of the preceding claims.

10. Beet harvesting machine (2) according to claim 9, **characterised in that**, the beet harvesting machine has at least two beet-head cleaning devices (10) according to any of the preceding claims and that the beet harvesting machine has a support (12), on which the beet-head cleaning devices are mounted, and wherein the beet harvesting machine preferably has a height adjustment device (14) for the beet-head cleaning device, in particular an actuator (16), which vertically adjusts the support relative to the frame (4).

11. Beet harvesting machine according to claim 9 or 10, **characterised in that**, the beet harvesting machine comprises a device (6) for topping the beets (8) situated in the ground and that this device (6) comprises flail cutters (7), as well as optional scalpers (11).

## Revendications

1. Dispositif de nettoyage de têtes de betteraves pour une récolteuse de betteraves avec
- un châssis (20),
- au moins deux moyeux de fléaux (22), dans lequel chaque moyeu de fléau est monté sur le châssis de manière à pouvoir tourner autour d'un axe de rotation (A1, A2) respectif, et
dans lequel le châssis présente des moyens d'accouplement mécaniques (30) pour l'accouplement du châssis (20) à une récolteuse de betteraves,
dans lequel le dispositif de nettoyage de têtes de betteraves comprend une pluralité de fléaux (30), adaptés pour séparer les feuilles ou naissances des feuilles de betteraves enfoncées dans le sol ou pour retirer les naissances de feuilles de betteraves étêtées enfoncées dans le sol, et
dans lequel chaque fléau est fixé, de préférence articulé, de manière mobile sur un des moyeux de fléaux, et
dans lequel le dispositif de nettoyage de têtes de betteraves est un module pouvant être manipulé séparément de la récolteuse de betteraves, **caractérisé en ce que**
le dispositif de nettoyage de têtes de betteraves comprend un entraînement (24), adapté pour entraîner les moyeux de fléaux par rapport au châssis, que
l'entraînement comprend un moteur (26) et une transmission (28), que
le moteur et la transmission sont montés sur le châssis, et que
le dispositif de nettoyage de têtes de betteraves présente des moyens d'accouplement électriques et hydrauliques (34) pour l'accouplement du moteur à une source d'énergie électrique ou hydraulique.

2. Dispositif de nettoyage de têtes de betteraves selon la revendication 1, **caractérisé en ce que** la transmission (28) est une transmission qui présente dans le trajet de force à partir du moteur vers chacun des moyeux de fléaux (22) exclusivement des roues dentées ou de friction.

3. Dispositif de nettoyage de têtes de betteraves selon l'une quelconque des revendications précédentes, **caractérisé en ce que** la transmission (28) est montée axialement entre les moyeux de fléaux (22), et en particulier que le moteur (26) est monté également axialement entre les moyeux de fléaux (22).

4. Dispositif de nettoyage de têtes de betteraves selon l'une quelconque des revendications précédentes, **caractérisé en ce qu'**au moins deux fléaux (30) qui sont montés sur un moyeu de fléau (22) forment un groupe de fléaux (36) et les fléaux de chaque groupe de fléaux, par rapport à l'axe de moyeux de fléau (A1, A2), sont disposés axialement les uns derrière les autres.

5. Dispositif de nettoyage de têtes de betteraves selon la revendication 4, **caractérisé en ce qu'**au moins un des fléaux d'un groupe de fléaux (36) présente une longueur axiale efficace (WL), et que la longueur axiale efficace de l'au moins un fléau est comprise entre 1 cm et 8 cm.

6. Dispositif de nettoyage de têtes de betteraves selon l'une quelconque des revendications précédentes, **caractérisé en ce qu'**au moins un des fléaux (30), de préférence chaque fléau (30), est constitué de matière plastique, en particulier d'élastomère.

7. Dispositif de nettoyage de têtes de betteraves selon l'une quelconque des revendications précédentes, **caractérisé en ce que** le moteur (26) est un moteur hydraulique ou un moteur électrique.

8. Dispositif de nettoyage de têtes de betteraves selon l'une quelconque des revendications précédentes, **caractérisé en ce que**
les moyens d'accouplement électriques ou hydrauliques (34) sont des moyens d'accouplement électriques pour l'accouplement du moteur à une source d'énergie électrique, ou que
le dispositif de nettoyage de têtes de betteraves présente des moyens d'accouplement électriques et hydrauliques (34) pour l'accouplement du moteur à une source d'énergie électrique et une hydraulique.

9. Récolteuse de betteraves (2) avec un cadre (4) et au moins un dispositif (6) pour étêter une betterave (8) se trouvant dans le sol, **caractérisée en ce que** la récolteuse de betteraves présente au moins un dispositif de nettoyage de têtes de betteraves (10) selon l'une quelconque des revendications précédentes.

10. Récolteuse de betteraves (2) selon la revendication 9, **caractérisée en ce que** la récolteuse de betteraves présente au moins deux dispositifs de nettoyage de têtes de betteraves (10) selon l'une quelconque des revendications précédentes et que la récolteuse de betteraves présente un support (12), sur lequel les dispositifs de nettoyage de têtes de betteraves sont montés, et dans laquelle de préférence la récolteuse de betteraves présente un dispositif de réglage en hauteur (14) du dispositif de nettoyage de têtes de betteraves, en particulier un actionneur (16), qui déplace le support verticalement par rapport au cadre (4).

11. Récolteuse de betteraves selon la revendication 9 ou 10, **caractérisée en ce que** la récolteuse de betteraves comprend un dispositif (6) pour étêter les betteraves (8) se trouvant dans le sol et que ce dispositif (6) comprend des lames de fléaux (7), ainsi qu'éventuellement des lames de décolleteuse postérieure (11).
